# EUROPÄISCHE PATENTANMELDUNG

(11) **EP 2 793 390 A1**
(43) Veröffentlichungstag der Anmeldung: **22.10.2014**
(21) Anmeldenummer: 13001951.6
(22) Anmeldetag: 15.04.2013
(51) Int. Cl.: H02P 6/08, H02P 25/02

(54) **Treiberschaltung für einen Vibrationsmotor und Treiberverfahren für einen Vibrationsmotor**

(71) Anmelder: Silicon Touch Technology, Inc., Hsin-Chu (TW)
(72) Erfinder: Chin, Chi-Yuan, Taipei City (TW); Chuang, Yu-Chun, Hsinchu County (TW)
(74) Vertreter: Hoefer & Partner

(57) **Zusammenfassung**

Die vorliegende Erfindung beschreibt eine Treiberschaltung (100) für einen Vibrationsmotor (200) und ein Treiberverfahren für einen Vibrationsmotor (200). Die Treiberschaltung (100) umfasst: eine an den Vibrationsmotor (200) gekoppelte Erkennungseinheit (102) zum Erkennen der Rotationsposition und der Rotationsgeschwindigkeit des Vibrationsmotors (200) und erzeugen eines entsprechenden Erkennungsergebnisses; und eine an die Erkennungseinheit (102) und an den Vibrationsmotor (200) gekoppelte Steuereinheit (104) zum Steuern einer Beschleunigung und einer Verzögerung des Vibrationsmotors (200) entsprechend dem Erkennungsergebnis. Das Treiberverfahren umfasst: Bereitstellen einer Erkennungseinheit (102) zum Erkennen von Rotationsposition und Rotationsgeschwindigkeit des Vibrationsmotors (200) und erzeugen eines entsprechenden Erkennungsergebnisses; und bereitstellen einer Steuereinheit (104) zum Steuern einer Beschleunigung und einer Verzögerung des Vibrationsmotors (200) entsprechend dem Erkennungsergebnis.

## Beschreibung

Die vorliegende Erfindung betrifft eine Treiberschaltung und ein Treiberverfahren, insbesondere eine Treiberschaltung und ein Treiberverfahren für einen Vibrationsmotor.

### Stand der Technik

Üblicherweise ist das herkömmliche Verfahren zum Erhöhen der Vibrationskraft eines Vibrationsmotors die Vergrößerung des Gewichts oder des Rotationsradius des Vibrationsmotors. Allerdings vergrößern die herkömmlichen Verfahren der Vergrößerung des Gewichts oder des Rotationsradius des Vibrationsmotors auch die Anlaufzeit des Vibrationsmotors, oder führen sogar zu einem Versagen des Motors beim Anlaufen.

Des Weiteren wird im chinesischen Patent Nr. CN 2786857Y ein Gebläsemotor mit Vibrationsfunktion offenbart. Allerdings benötigt dieser herkömmliche Gebläsemotor einen zusätzlichen exzentrischen magnetischen Pol, um diese Vibrationsfunktion zu erzielen, wodurch höhere Bauteilkosten verursacht werden.

### Offenbarung der Erfindung

Es ist daher eine Aufgabe der vorliegenden Erfindung, eine Treiberschaltung für einen Vibrationsmotor und ein Treiberverfahren für einen Vibrationsmotor bereitzustellen, wobei die Treiberschaltung und das Treiberverfahren in der Lage sind die Vibrationskraft eines Vibrationsmotors zu vergrößern, ohne das Gewicht oder den Rotationsradius des Vibrationsmotors zu vergrößern, um das oben gennannte Problem zu lösen.

Die Lösung dieser Aufgabe erfolgt durch eine Treiberschaltung für einen Vibrationsmotor mit den Merkmalen des Anspruches 1. Die Unteransprüche offenbaren bevorzugte Weiterbildungen der Erfindung. Gemäß einer Ausführungsform der vorliegenden Erfindung ist eine Treiberschaltung für einen Vibrationsmotor offenbart. Die Treiberschaltung umfasst: eine an den Vibrationsmotor gekoppelte Erkennungseinheit zum Erkennen einer Rotationsposition und einer Rotationsgeschwindigkeit des Vibrationsmotors und zum entsprechenden Erzeugen eines Erkennungsergebnisses; und eine an die Erkennungseinheit und an den Vibrationsmotor gekoppelte Steuereinheit zum Steuern von Beschleunigung und Verzögerung des Vibrationsmotors entsprechend dem Erkennungsergebnis.

Gemäß einer Ausführungsform der vorliegenden Erfindung ist ein Treiberverfahren für einen Vibrationsmotor offenbart. Das Treiberverfahren umfasst: Bereitstellen einer Erkennungseinheit zum Erkennen einer Rotationsposition und einer Rotationsgeschwindigkeit des Vibrationsmotors und entsprechendes Erzeugen eines Erkennungsergebnisses; und Bereitstellen einer Steuereinheit zum Steuern von Beschleunigung und Verzögerung des Vibrationsmotors entsprechend dem Erkennungsergebnis.

Kurz zusammengefasst ist die erfindungsgemäße Treiberschaltung und das erfindungsgemäße Treiberverfahren dazu in der Lage, dem Vibrationsmotor eine größere Vibrationskraft zu geben, ohne das Gewicht oder den Rotationsradius des Vibrationsmotors zu vergrößern.

Diese und andere Aufgaben der vorliegenden Erfindung werden für den Durchschnittsfachmann auf dem Gebiet zweifelsohne nach der Lektüre der folgenden detaillierten Beschreibung und der bevorzugten Ausführungsformen offensichtlich werden, die in den verschiedenen Figuren und Zeichnungen dargestellt sind.

### Kurze Beschreibung der Zeichnungen

Weitere Einzelheiten, Merkmale und Vorteile der Erfindung ergeben sich aus nachfolgender Beschreibung von Ausführungsbeispielen anhand der Zeichnungen. Darin zeigt:
FIG. 1 ein vereinfachtes Blockdiagramm einer Treiberschaltung für einen Vibrationsmotor entsprechend einer Ausführungsform der vorliegenden Erfindung;
FIG. 2 ein erstes Steuerwellendiagramm und ein zweites Steuerwellendiagramm der Treiberschaltung;
FIG. 3 ein vereinfachtes Ablaufdiagramm der Beschleunigung und Verzögerung des Vibrationsmotors während eines Betriebszeitraumes des Vibrationsmotors gemäß einer Ausführungsform der Erfindung;
FIG. 4 ein vereinfachtes Ablaufdiagramm der Beschleunigung und Verzögerung des Vibrationsmotors während eines Anlaufzeitraumes des Vibrationsmotors gemäß einer Ausführungsform der Erfindung;
FIG. 5 das erste Steuerwellendiagramm und ein drittes Steuerwellendiagramm der Treiberschaltung 100 mit der zusätzlichen Kraft in vertikaler Richtung; und
FIG. 6 ein Ablaufdiagramm, welches ein Treiberverfahren für einen Vibrationsmotor gemäß den Betriebsplänen der Treiberschaltung in FIG. 1 der vorliegenden Erfindung zeigt.

### Ausführungsformen der Erfindung

Einige Ausdrücke, die in der folgenden Beschreibung und den Ansprüchen benutzt werden beziehen sich auf bestimmte Systemkomponenten. Wie für den Fachmann ersichtlich, können sich Hersteller unter anderen Benennungen auf eine Komponente beziehen. Dieses Dokument beabsichtigt nicht, zwischen Komponenten zu unterscheiden, die sich in der Benennung, aber nicht in der Funktion unterscheiden. In den folgenden Ausführungen und in den Ansprüchen werden die Ausdrücke "beinhalten", "beinhaltend", "umfassen" und "umfassend" in ihrer nicht begrenzenden Bedeutung verwendet, und sollten im Sinne von "beinhaltend, aber nicht beschränkt auf..." verstanden werden. Die Ausdrücke "verbinden", "verbunden" und "zwischen... geschaltet" sollen entweder eine indirekte oder eine direkte elektrische Verbindung beschreiben. Wenn also ein erstes Gerät mit einem zweiten Gerät verbunden oder zwischen zwei Geräte geschaltet ist, so kann diese Verbindung durch eine direkte elektrische Verbindung oder durch eine indirekte elektrische Verbindung über andere Geräte und Anschlüsse gestaltet sein.

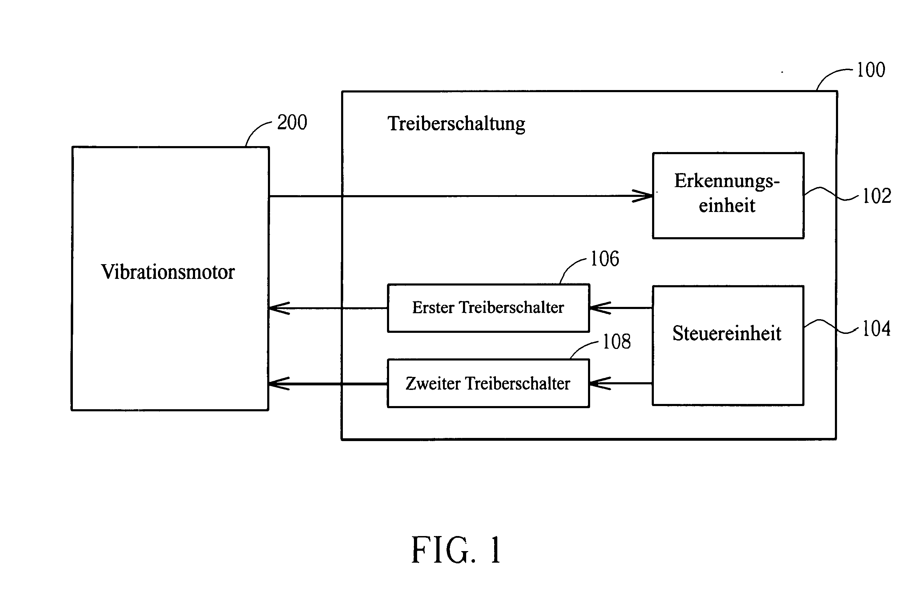

FIG.1 zeigt ein vereinfachtes Blockdiagramm einer Treiberschaltung 100 für einen Vibrationsmotor 200 entsprechend einer Ausführungsform der vorliegenden Erfindung.

Wie in FIG.1 gezeigt, umfasst die Treiberschaltung 100: eine Erkennungseinheit 102, eine Steuereinheit 104, einen ersten Treiberschalter 106 und einen zweiten Treiberschalter 108. Die Erkennungseinheit 102 ist mit dem Vibrationsmotor 200 verbunden, und wird zum Erkennen einer Rotationsposition und einer Rotationsgeschwindigkeit des Vibrationsmotors 200 und zum entsprechenden Erstellen eines Erkennungsergebnisses verwendet. Die Steuereinheit 104 ist mit der Erkennungseinheit 102 und dem Vibrationsmotors 200 verbunden, und wird zum Steuern der Beschleunigung und der Verzögerung des Vibrationsmotors entsprechend des Erkennungsergebnisses verwendet. Der erste Treiberschalter 106 und der zweite Treiberschalter 108 sind zwischen einen Versorgungsanschluss des Vibrationsmotors 200 und die Steuereinheit 104 geschaltet. Die Steuereinheit 104 steuert den Vibrationsmotor 200, um entsprechend dem Erkennungsergebnis periodisch zu Beschleunigen und zu Verzögern, wobei das Erkennungsergebnis erkannte Rotationspositionen umfasst, die zu bestimmten Rotationswinkeln des Vibrationsmotors 200 korrespondieren. Hierbei sei Angemerkt, dass die obige Ausführungsform nur zu veranschaulichenden Zwecken dient, und nicht als eine Einschränkung der vorliegenden Erfindung gedacht ist. Beispielsweise kann der Vibrationsmotor 200 eine einzelne Spule mit zwei Invertern aufweisen. Zudem beinhaltet das Erkennungsergebnis keine erkannten Rotationspositionen, die zu den Rotationswinkeln des Vibrationsmotors korrespondieren, falls der Vibrationsmotor 200 keinen exzentrischen Aufbau hat (wie bei einem Gebläse).

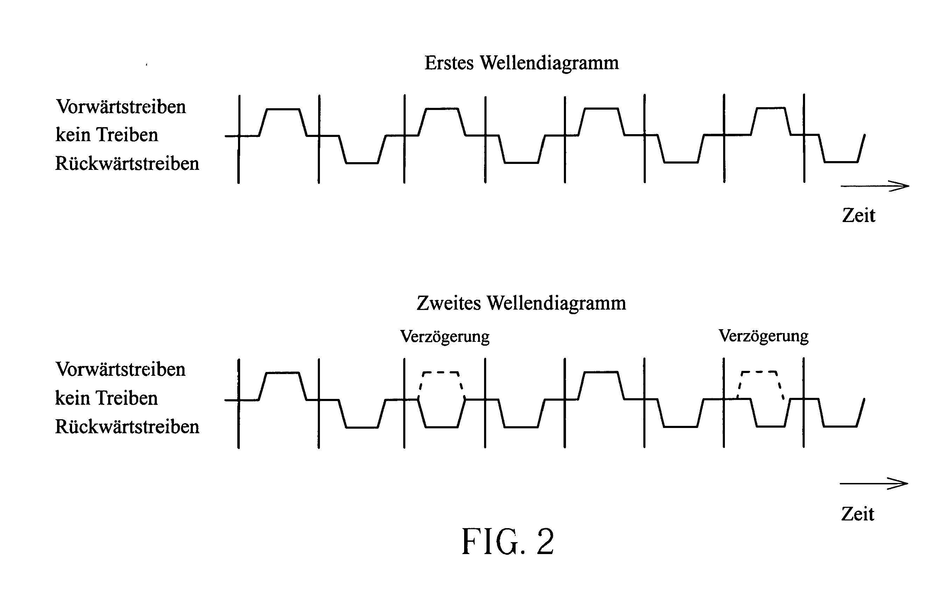

FIG. 2 zeigt beispielhaft ein erstes Steuerwellendiagramm und ein zweites Steuerwellendiagramm der Treiberschaltung 100. Das erste Steuerwellendiagramm zeigt einen normalen Betriebsmodus der Treiberschaltung 100, und das zweite Steuerwellendiagramm zeigt einen ersten Vibrationsmodus der Treiberschaltung 100. Wie in FIG. 2 gezeigt, steuert die Steuereinheit 104 eine Beschleunigung des Vibrationsmotors 200, wenn die Treiberschaltung 100 vorwärts treibt, und die Steuereinheit 104 steuert eine Verzögerung des Vibrationsmotors 200, wenn die Treiberschaltung rückwärts treibt, und die Steuereinheit 104 steuert keine Beschleunigung oder Verzögerung des Vibrationsmotors, wenn die Treiberschaltung nicht treibt. Der Unterschied zwischen dem normalen Betriebsmodus und dem ersten Vibrationsmodus der Treiberschaltung 100 ist, dass in einem bestimmten Zeitraum die Treiberschaltung 100 im normalen Betriebsmodus vorwärts treibt (d.h. die Steuereinheit 104 steuert eine Beschleunigung des Vibrationsmotors 200) und die Treiberschaltung 100 in dem ersten Vibrationsmodus rückwärts treibt (d.h. die Steuereinheit 104 steuert eine Verzögerung des Vibrationsmotors 200), wie es in Fig. 2 ersichtlich ist. Oder, in einem anderen bestimmten Zeitraum, treibt die Treiberschaltung 100 im normalen Betriebsmodus vorwärts (d.h. die Steuereinheit 104 steuert eine Beschleunigung des Vibrationsmotors 200) und in dem ersten Vibrationsmodus mit einer anderen Phase rückwärts (d.h. die Steuereinheit 104 steuert eine Verzögerung des Vibrationsmotors 200 mit einem anderen Zeitablauf), wie es in Fig. 2 ersichtlich ist. Zusätzlich können die in FIG.2 gezeigten Verzögerungszeiträume entsprechend des Schwerpunktes einer Basis (nicht gezeigt), die mit dem Vibrationsmotor 200 verbunden ist, verändert werden. Zum Beispiel können die Verzögerungszeiträume von der dritten und siebten Phase, wie in FIG.2 gezeigt, auf die erste und fünfte Phase gewechselt werden, wenn es einen Unterschied oder eine Änderung im Schwerpunkt der Basis gibt.

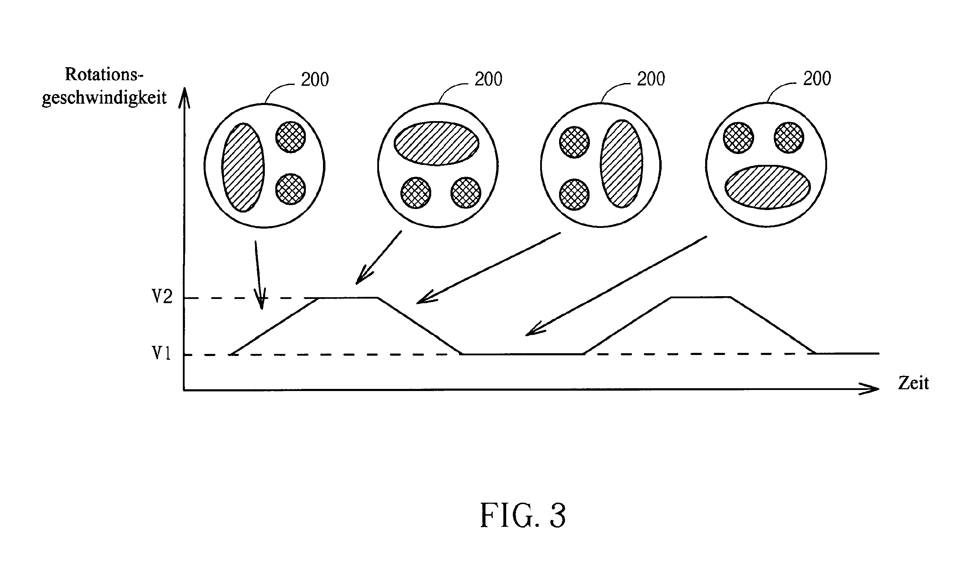

FIG. 3 zeigt ein vereinfachtes Ablaufdiagramm der Beschleunigung und Verzögerung des Vibrationsmotors 200 während eines Betriebszeitraumes des Vibrationsmotors 200 gemäß einer Ausführungsform der Erfindung, und FIG. 3 kann das Ergebnis einer Integration des zweiten Steuerwellendiagramms aus FIG. 2 sein. Wie in FIG. 3 gezeigt, steuert die Steuereinheit 104 eine Beschleunigung des Vibrationsmotors 200 durch Einschalten des ersten Treiberschalters 106, wenn die Erkennungseinheit 102 erkennt, dass der Vibrationsmotor 200 in einer ersten Rotationsposition ist und eine erste Rotationsgeschwindigkeit V1 hat, und ein entsprechendes erstes Erkennungsergebnis erzeugt. Danach beendet die Steuereinheit 104 die Beschleunigung des Vibrationsmotors durch Abschalten des ersten Treiberschalters 106, wenn die Erkennungseinheit 102 erkennt, dass der Vibrationsmotor 200 in einer zweiten Rotationsposition ist und eine zweite Rotationsgeschwindigkeit V2 hat, und ein entsprechendes zweites Erkennungsergebnis erzeugt. Danach steuert die Steuereinheit 104 eine Verzögerung des Vibrationsmotors 200 durch Einschalten des zweiten Treiberschalters 108, wenn die Erkennungseinheit 102 erkennt, dass der Vibrationsmotor 200 in einer dritten Rotationsposition ist und die zweite Rotationsgeschwindigkeit V2 hat, und ein entsprechendes drittes Erkennungsergebnis erzeugt. Danach beendet die Steuereinheit 104 die Verzögerung des Vibrationsmotors durch Abschalten des zweiten Treiberschalters 108, wenn die Erkennungseinheit 102 erkennt, dass der Vibrationsmotor 200 in einer vierten Rotationsposition ist und die erste Rotationsgeschwindigkeit V1 hat, und ein entsprechendes viertes Erkennungsergebnis erzeugt. Auf diese Weise kann der Vibrationsmotor 200 ohne eine Vergrößerung des Gewichtes oder des Rotationsradius des Vibrationsmotors 200 eine größere Vibrationskraft erzeugen, wobei der Vibrationsmotor 200 besonders in bestimmten der Beschleunigung entsprechenden Richtungen eine größere Vibrationskraft hat.

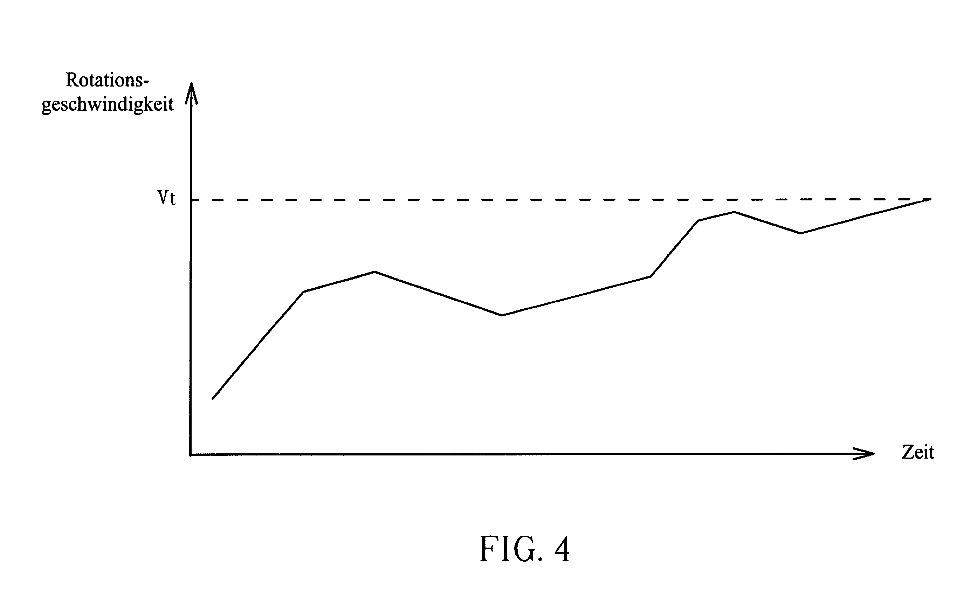

FIG. 4 zeigt ein vereinfachtes Ablaufdiagramm der Beschleunigung und Verzögerung des Vibrationsmotors 200 während eines Anlaufzeitraumes des Vibrationsmotors 200 gemäß einer Ausführungsform der Erfindung. Wie in FIG. 4 gezeigt, steuert die Steuereinheit 104 die Beschleunigung und die Verzögerung des Vibrationsmotors 200 (d.h. die Steuereinheit 104 steuert den Vibrationsmotor 200 um entsprechend des Erkennungsergebnisses periodisch zu beschleunigen und zu verzögern) um die Rotationsgeschwindigkeit des Vibrationsmotors 200 schrittweise auf einen Rotationsgeschwindigkeits-Zielwert Vt zu erhöhen. Es sei Angemerkt, dass die obige Ausführung nur zu veranschaulichenden Zwecken dient, und nicht als eine Einschränkung der vorliegenden Erfindung gedacht ist. Beispielsweise, falls der Vibrationsmotor 200 keinen exzentrischen Aufbau hat (wie bei einem Gebläse), und während eines Anlaufzeitraums des Vibrationsmotors 200, steuert die Steuereinheit 104 die Beschleunigung und die Verzögerung des Vibrationsmotors 200, so dass eine Rotationsgeschwindigkeit des Vibrationsmotors 200 schrittweise auf einen Rotationsgeschwindigkeits-Zielwert gesenkt wird.

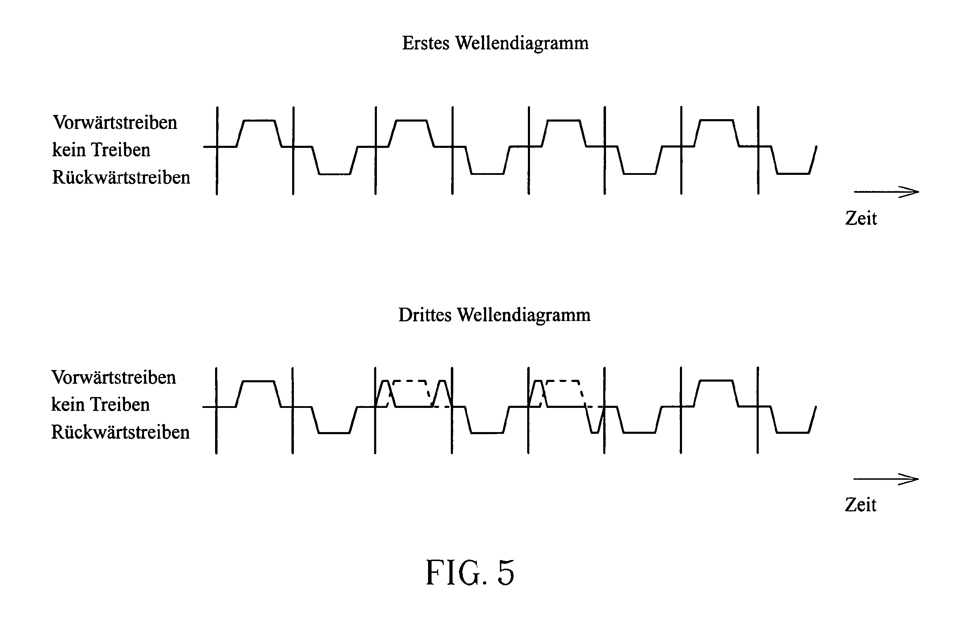

Es sei Angemerkt, dass die obige Ausführungsform nur zu veranschaulichenden Zwecken dient, und nicht als eine Einschränkung der vorliegenden Erfindung gedacht ist. Beispielsweise kann die Treiberschaltung 100 des Weiteren eine Spule oder einen Feldmagnet umfassen, um dem Vibrationsmotor eine zusätzliche Kraft in vertikalen Richtungen zu verleihen, die der herkömmliche Vibrationsmotor nicht besitzt. FIG. 5 zeigt das erste Steuerwellendiagramm und ein drittes Steuerwellendiagramm der Treiberschaltung 100 mit der zusätzlichen Kraft in vertikaler Richtung. Das erste Steuerwellendiagramm zeigt den normalen Betriebsmodus der Treiberschaltung 100 und das dritte Steuerwellendiagramm zeigt einen zweiten Vibrationsmodus der Treiberschaltung 100. Wie in FIG. 5 gezeigt, steuert die Steuereinheit 104 eine Beschleunigung des Vibrationsmotors 200, wenn die Treiberschaltung 100 vorwärts treibt, und die Steuereinheit 104 steuert eine Verzögerung des Vibrationsmotors 200, wenn die Treiberschaltung 100 rückwärts treibt, und die Steuereinheit 104 steuert keine Beschleunigung oder Verzögerung des Vibrationsmotors 200, wenn die Treiberschaltung 100 nicht treibt. Wie in FIG.5 gezeigt ist der Unterschied zwischen dem normalen Betriebsmodus und dem zweiten Vibrationsmodus der Treiberschaltung 100, dass in einem bestimmten Zeitraum die Treiberschaltung 100 im normalen Betriebsmodus mit einer normalen Phase vorwärts treibt (d.h. die Steuereinheit 104 gibt mit einer normalen Phase ein Treibersignal an den Vibrationsmotor 200 aus) und die Treiberschaltung 100 in dem zweiten Vibrationsmodus mit einer voreilenden und einer nacheilenden Phase vorwärts treibt (d.h. die Steuereinheit 104 gibt mit einer voreilenden Phase und einer nacheilenden Phase zwei gleiche Treibersignale an den Vibrationsmotor 200 aus), um die Position der Phase zu nutzen, um eine vertikale Kraft zu erzeugen. Oder, in einem anderen bestimmten Zeitraum, treibt die Treiberschaltung 100 im normalen Betriebsmodus mit einer normalen Phase vorwärts (d.h. die Steuereinheit 104 gibt mit der normalen Phase ein Treibersignal an den Vibrationsmotor 200 aus) und die Treiberschaltung 100 treibt in dem zweiten Vibrationsmodus mit einer voreilenden Phase vorwärts und treibt mit einer nacheilenden Phase rückwärts (d.h. die Steuereinheit 104 gibt mit der voreilenden Phase und der nacheilenden Phase zwei unterschiedliche Treibersignale an den Vibrationsmotor 200 aus), um die Position der Phase zu nutzen, um eine vertikale Kraft zu erzeugen, wie in FIG.5 ersichtlich ist.

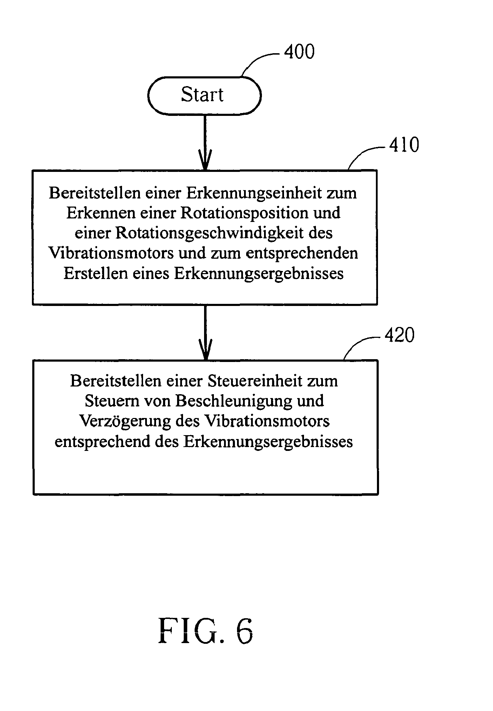

FIG. 6 ist ein Ablaufdiagramm, welches ein Treiberverfahren für einen Vibrationsmotors gemäß den oben beschriebenen Betriebsabläufen der Treiberschaltung 100 der vorliegenden Erfindung zeigt. Unter der Voraussetzung, dass im Wesentlichen das gleiche Ergebnis erzielt wird, müssen die Schritte des Ablaufdiagramms nicht in der genauen Reihenfolge sein, wie sie in FIG. 6 gezeigt sind, und müssen nicht zusammenhängend sein, was bedeutet, dass andere Schritte zwischenliegend sein können. Das Treiberverfahren der vorliegenden Erfindung umfasst die folgenden Schritte:
Schritt 400: Start.
Schritt 410: Stelle eine Erkennungseinheit zum Erkennen von Rotationsposition und Rotationsgeschwindigkeit des Vibrationsmotors und entsprechenden Erzeugen eines Erkennungsergebnisses bereit; und
Schritt 420: Stelle eine Steuereinheit zum Steuern einer Beschleunigung und einer Verzögerung des Vibrationsmotors entsprechend dem Erkennungsergebnis bereit.

Im obigen Ablaufdiagramm der vorliegenden Erfindung kann das Treiberverfahren der vorliegenden Erfindung des Weiteren umfassen: Bereitstellen einer Vielzahl von Treiberschaltern, die zwischen einen Versorgungsanschluss des Vibrationsmotors und die Steuereinheit geschaltet sind, wobei im Schritt des Steuerns der Beschleunigung und der Verzögerung des Vibrationsmotors die Steuerung der Beschleunigung und der Verzögerung des Vibrationsmotors durch ein Steuern der Treiberschalter entsprechend des Erkennungsergebnisses erfolgt.

Es sei Angemerkt, dass die obige Ausführung nur zu veranschaulichenden Zwecken dient, und nicht als eine Einschränkung der vorliegenden Erfindung gedacht ist. Beispielsweise kann das Erkennungsergebnis erkannte Rotationspositionen beinhalten, die zu bestimmten Rotationswinkeln des Vibrationsmotors korrespondieren. Des Weiteren beinhaltet das Erkennungsergebnis keine erkannten Rotationspositionen, die zu bestimmten Rotationswinkein des Vibrationsmotors 200 korrespondieren, falls der Vibrationsmotor 200 keinen exzentrischen Aufbau hat (wie bei einem Gebläse). Außerdem kann der Schritt des Steuerns einer Beschleunigung und einer Verzögerung des Vibrationsmotors das Steuern einer periodischen Beschleunigung und Verzögerung des Vibrationsmotors entsprechend eines Erkennungsergebnisses umfassen. Darüber hinaus steuert während eines Anlaufzeitraumes des Vibrationsmotors der Schritt des Steuerns der Beschleunigung und der Verzögerung des Vibrationsmotors die Beschleunigung und die Verzögerung des Vibrationsmotors, so dass eine Rotationsgeschwindigkeit des Vibrationsmotors erzeugt wird, die schrittweise auf einen Rotationsgeschwindigkeits-Zielwert ansteigt. Während einer Betriebszeitraumes des Vibrationsmotors steuert der Schritt des Steuerns der Beschleunigung und der Verzögerung des Vibrationsmotors die Beschleunigung und die Verzögerung des Vibrationsmotors, so dass eine Rotationsgeschwindigkeit des Vibrationsmotors erzeugt wird, die wechselnd zwischen einem ersten Wert der Rotationsgeschwindigkeit und einem zweiten Wert der Rotationsgeschwindigkeit umgeschaltet wird.

Kurz zusammengefasst ist die erfindungsgemäße Treiberschaltung und das erfindungsgemäße Treiberverfahren in der Lage, die Vibrationskraft eines Vibrationsmotors zu vergrößern, ohne das Gewicht oder den Rotationsradius des Vibrationsmotors zu vergrößern. Außerdem benötigt die erfindungsgemäße Treiberschaltung und das erfindungsgemäße Treiberverfahren im Vergleich mit dem Chinesischen Patent NR. CN 2786857Y keinen zusätzlichen magnetischen Pol, um die Vibrationsfunktion zu erreichen, und somit kann die vorliegende Erfindung die Bauteilkosten reduzieren.

Wie für den Fachmann auf dem Gebiet leicht erkennbar ist, können zahlreiche Modifikationen und Änderungen der Vorrichtung und des Verfahrens gemacht werden, wobei die Lehre der Erfindung erhalten bleibt. Dementsprechend soll die vorstehende Offenbarung als nur durch die Maße und Grenzen der angefügten Ansprüche begrenzt ausgelegt werden.

Zusammenfassend ist festzustellen, dass die vorliegende Erfindung eine Treiberschaltung für einen Vibrationsmotor und ein Treiberverfahren für einen Vibrationsmotor beschreibt. Die Treiberschaltung umfasst: eine an den Vibrationsmotor gekoppelte Erkennungseinheit zum Erkennen der Rotationsposition und der Rotationsgeschwindigkeit des Vibrationsmotors und zum entsprechenden Erzeugen eines Erkennungsergebnisses; und eine an die Erkennungseinheit und an den Vibrationsmotor gekoppelte Steuereinheit zum Steuern von Beschleunigung und Verzögerung des Vibrationsmotors entsprechend dem Erkennungsergebnis. Das Treiberverfahren umfasst: Bereitstellen einer Erkennungseinheit zum Erkennen von Rotationsposition und Rotationsgeschwindigkeit des Vibrationsmotors und zum entsprechenden Erzeugen eines Erkennungsergebnisses; und Bereitstellen einer Steuereinheit zum Steuern von Beschleunigung und Verzögerung des Vibrationsmotors entsprechend dem Erkennungsergebnis.

## Patentansprüche

1. Treiberschaltung (100) für einen Vibrationsmotor (200), umfassend:
eine an den Vibrationsmotor (200) gekoppelte Erkennungseinheit (102) zum Erkennen einer Rotationsposition und einer Rotationsgeschwindigkeit des Vibrationsmotors (200) und zum entsprechenden Erzeugen eines Erkennungsergebnisses; und
eine an die Erkennungseinheit (102) und an den Vibrationsmotor (200) gekoppelte Steuereinheit (104) zum Steuern von Beschleunigung und Verzögerung des Vibrationsmotors (200) entsprechend dem Erkennungsergebnis.

2. Treiberschaltung nach Anspruch 1, wobei die Steuereinheit (104) den Vibrationsmotor (200) steuert, so dass dieser entsprechend des Erkennungsergebnisses periodisch beschleunigt und verzögert.

3. Treiberschaltung nach Anspruch 2, wobei während eines Anlaufzeitraums des Vibrationsmotors (200) die Steuereinheit (104) die Beschleunigung und die Verzögerung des Vibrationsmotors (200) so steuert, dass eine Rotationsgeschwindigkeit des Vibrationsmotors (200) schrittweise auf einen Rotationsgeschwindigkeits-Zielwert erhöht wird.

4. Treiberschaltung nach Anspruch 2, wobei während eines Betriebszeitraums des Vibrationsmotors (200) die Steuereinheit (104) die Beschleunigung und die Verzögerung des Vibrationsmotors (200) so steuert, dass eine Rotationsgeschwindigkeit des Vibrationsmotors (200) wechselnd zwischen einem ersten Wert der Rotationsgeschwindigkeit und einem zweiten Wert der Rotationsgeschwindigkeit umgeschaltet wird.

5. Treiberschaltung nach Anspruch 2, wobei der Vibrationsmotor (200) keinen exzentrischen Aufbau hat, und während eines Anlaufzeitraumes des Vibrationsmotors (200) die Steuereinheit (104) die Beschleunigung und die Verzögerung des Vibrationsmotors (200) so steuert, dass eine Rotationsgeschwindigkeit des Vibrationsmotors (200) schrittweise auf einen Rotationsgeschwindigkeits-Zielwert abgesenkt wird.

6. Treiberschaltung nach Anspruch 5, wobei der Vibrationsmotor (200) ein Gebläse ist.

7. Treiberschaltung nach Anspruch 1, des Weiteren umfassend:
eine Vielzahl von Treiberschaltern, die zwischen einen Versorgungsanschluss des Vibrationsmotors (200) und die Steuereinheit (104) geschaltet sind;
wobei die Steuereinheit (104) die Beschleunigung und die Verzögerung des Vibrationsmotors (200) durch ein Steuern der Treiberschalter entsprechend dem Erkennungsergebnis steuert.

8. Treiberschaltung nach Anspruch 1, wobei das Erkennungsergebnis erkannte Rotationspositionen beinhaltet, die zu bestimmten Rotationswinkeln des Vibrationsmotors (200) korrespondieren.

9. Treiberschaltung nach Anspruch 1, wobei die Treiberschaltung (100) einen normalen Betriebsmodus und einen Vibrationsmodus aufweist, wobei der Unterschied zwischen dem normalen Betriebsmodus und dem Vibrationsmodus der Treiberschaltung (100) ist, dass in einem bestimmten Zeitraum die Treiberschaltung (100) im normalen Betriebsmodus vorwärts treibt und die Treiberschaltung (100) im Vibrationsmodus rückwärts treibt.

10. Treiberschaltung nach Anspruch 9, wobei sich der bestimmte Zeitraum gemäß dem Schwerpunkt einer mit dem Vibrationsmotor (200) verbundenen Basis ändert.

11. Treiberschaltung nach Anspruch 1, wobei die Treiberschaltung (100) einen normalen Betriebsmodus und einen Vibrationsmodus aufweist, wobei der Unterschied zwischen dem normalen Betriebsmodus und dem Vibrationsmodus der Treiberschaltung (100) ist, dass in einem bestimmten Zeitraum die Treiberschaltung (100) im normalen Betriebsmodus vorwärts treibt und die Treiberschaltung (100) im Vibrationsmodus mit einer anderen Phase rückwärts treibt.

12. Treiberschaltung nach Anspruch 11, wobei sich der bestimmte Zeitraum gemäß dem Schwerpunkt einer mit dem Vibrationsmotor (200) verbundenen Basis ändert.

13. Treiberschaltung nach Anspruch 1, wobei die Treiberschaltung (100) einen normalen Betriebsmodus und einen Vibrationsmodus aufweist, wobei der Unterschied zwischen dem normalen Betriebsmodus und dem Vibrationsmodus der Treiberschaltung (100) ist, dass in einem bestimmten Zeitraum die Treiberschaltung (100) im normalen Betriebsmodus mit einer normalen Phase vorwärts treibt und die Treiberschaltung (100) im Vibrationsmodus mit einer voreilenden oder einer nacheilenden Phase vorwärts treibt, um die Position der Phase zu nutzen, die eine vertikale Kraft erzeugt.

14. Treiberschaltung nach Anspruch 1, wobei die Treiberschaltung (100) einen normalen Betriebsmodus und einen Vibrationsmodus aufweist, wobei der Unterschied zwischen dem normalen Betriebsmodus und dem Vibrationsmodus ist, dass in einem bestimmten Zeitraum die Treiberschaltung (100) im normalen Betriebsmodus mit einer normalen Phase vorwärts treibt und die Treiberschaltung (100) im Vibrationsmodus mit einer voreilenden Phase vorwärts treibt und mit einer nacheilenden Phase rückwärts treibt um die Position der Phase zu nutzen, die eine vertikale Kraft erzeugt.

## Geänderte Patentansprüche

### Geänderte Patentansprüche gemäss Regel 137(2) EPÜ.

**1.** Treiberschaltung (100) für einen Vibrationsmotor (200),
**gekennzeichnet durch**
eine an den Vibrationsmotor (200) gekoppelte Erkennungseinheit (102) zum Erkennen
einer Rotationsposition und einer Rotationsgeschwindigkeit des Vibrationsmotors (200) und zum entsprechenden Erzeugen eines Erkennungsergebnisses; und
eine an die Erkennungseinheit (102) und an den Vibrationsmotor (200) gekoppelte
Steuereinheit (104) zum Steuern von Beschleunigung und Verzögerung des Vibrationsmotors (200) entsprechend dem Erkennungsergebnis.

**2.** Treiberschaltung nach Anspruch 1, wobei die Steuereinheit (104) den Vibrationsmotor (200) steuert, so dass dieser entsprechend des Erkennungsergebnisses periodisch beschleunigt und verzögert.

**3.** Treiberschaltung nach Anspruch 2, wobei während eines Anlaufzeitraums des Vibrationsmotors (200) die Steuereinheit (104) die Beschleunigung und die Verzögerung des Vibrationsmotors (200) so steuert, dass eine Rotationsgeschwindigkeit des Vibrationsmotors (200) schrittweise auf einen Rotationsgeschwindigkeits-Zielwert erhöht wird.

**4.** Treiberschaltung nach Anspruch 2, wobei während eines Betriebszeitraums des Vibrationsmotors (200) die Steuereinheit (104) die Beschleunigung und die Verzögerung des Vibrationsmotors (200) so steuert, dass eine Rotationsgeschwindigkeit des Vibrationsmotors (200) wechselnd zwischen einem ersten Wert der Rotationsgeschwindigkeit und einem zweiten Wert der Rotationsgeschwindigkeit umgeschaltet wird.

**5.** Treiberschaltung nach Anspruch 2, wobei der Vibrationsmotor (200) keinen exzentrischen Aufbau hat, und während eines Anlaufzeitraumes des Vibrationsmotors (200) die Steuereinheit (104) die Beschleunigung und die Verzögerung des Vibrationsmotors (200) so steuert, dass eine Rotationsgeschwindigkeit des Vibrationsmotors (200) schrittweise auf einen Rotationsgeschwindigkeits-Zielwert abgesenkt wird.

**6.** Treiberschaltung nach Anspruch 5, wobei der Vibrationsmotor (200) ein Gebläse ist.

**7.** Treiberschaltung nach Anspruch 1, des Weiteren umfassend:
eine Vielzahl von Treiberschaltern, die zwischen einen Versorgungsanschluss des
Vibrationsmotors (200) und die Steuereinheit (104) geschaltet sind;
wobei die Steuereinheit (104) die Beschleunigung und die Verzögerung des
Vibrationsmotors (200) durch ein Steuern der Treiberschalter entsprechend dem Erkennungsergebnis steuert.

**8.** Treiberschaltung nach Anspruch 1, wobei das Erkennungsergebnis erkannte Rotationspositionen beinhaltet, die zu bestimmten Rotationswinkeln des Vibrationsmotors (200) korrespondieren.

**9.** Treiberschaltung nach Anspruch 1, wobei die Treiberschaltung (100) einen normalen Betriebsmodus und einen Vibrationsmodus aufweist, wobei der Unterschied zwischen dem normalen Betriebsmodus und dem Vibrationsmodus der Treiberschaltung (100) ist, dass in einem bestimmten Zeitraum die Treiberschaltung (100) im normalen Betriebsmodus vorwärts treibt und die Treiberschaltung (100) im Vibrationsmodus rückwärts treibt.

**10.** Treiberschaltung nach Anspruch 9, wobei sich der bestimmte Zeitraum gemäß dem Schwerpunkt einer mit dem Vibrationsmotor (200) verbundenen Basis ändert.

**11.** Treiberschaltung nach Anspruch 1, wobei die Treiberschaltung (100) einen normalen Betriebsmodus und einen Vibrationsmodus aufweist, wobei der Unterschied zwischen dem normalen Betriebsmodus und dem Vibrationsmodus der Treiberschaltung (100) ist, dass in einem bestimmten Zeitraum die Treiberschaltung (100) im normalen Betriebsmodus vorwärts treibt und die Treiberschaltung (100) im Vibrationsmodus mit einer anderen Phase rückwärts treibt.

**12.** Treiberschaltung nach Anspruch 11, wobei sich der bestimmte Zeitraum gemäß dem Schwerpunkt einer mit dem Vibrationsmotor (200) verbundenen Basis ändert.

**13.** Treiberschaltung nach Anspruch 1, wobei die Treiberschaltung (100) einen normalen Betriebsmodus und einen Vibrationsmodus aufweist, wobei der Unterschied zwischen dem normalen Betriebsmodus und dem Vibrationsmodus der Treiberschaltung (100) ist, dass in einem bestimmten Zeitraum die Treiberschaltung (100) im normalen Betriebsmodus mit einer normalen Phase vorwärts treibt und die Treiberschaltung (100) im Vibrationsmodus mit einer voreilenden oder einer nacheilenden Phase vorwärts treibt, um die Position der Phase zu nutzen, die eine vertikale Kraft erzeugt.

**14.** Treiberschaltung nach Anspruch 1, wobei die Treiberschaltung (100) einen normalen Betriebsmodus und einen Vibrationsmodus aufweist, wobei der Unterschied zwischen dem normalen Betriebsmodus und dem Vibrationsmodus ist, dass in einem bestimmten Zeitraum die Treiberschaltung (100) im normalen Betriebsmodus mit einer normalen Phase vorwärts treibt und die Treiberschaltung (100) im Vibrationsmodus mit einer voreilenden Phase vorwärts treibt und mit einer nacheilenden Phase rückwärts treibt um die Position der Phase zu nutzen, die eine vertikale Kraft erzeugt.
